Europäisches Patentamt

(19) European Patent Office

Office européen des brevets

(11) Numéro de publication: **0 250 389 B1**

# (12) FASCICULE DE BREVET EUROPEEN

(45) Date de publication du fascicule du brevet:
14.11.90

(51) Int. Cl.⁵: **B29C 67/22**, B65D 81/06, B25J 9/00

(21) Numéro de dépôt: **87870085.5**

(22) Date de dépôt: **18.06.87**

(54) **Procédé pour confectionner un élément d'emballage en mousse synthétique.**

(30) Priorité: **18.06.86 BE 216801**

(43) Date de publication de la demande:
**23.12.87 Bulletin 87/52**

(45) Mention de la délivrance du brevet:
**14.11.90 Bulletin 90/46**

(84) Etats contractants désignés:
**AT BE CH DE FR GB IT LI LU NL**

(56) Documents cités:
**EP-A- 0 155 109**
**FR-A- 2 094 092**
**FR-A- 2 114 182**
**FR-A- 2 511 889**
**GB-A- 1 571 893**
**US-A- 3 950 462**
**US-A- 4 130 615**
**US-A- 4 390 337**

(73) Titulaire: **Soudan, Freddy Delphin, Rabotstraat, 81, B-9000 GENT(BE)**

(72) Inventeur: **Soudan, Freddy Delphin, Rabotstraat, 81, B-9000 GENT(BE)**

(74) Mandataire: **Fobe, Edouard et al, Bureau VANDER HAEGHEN 63, Avenue de la Toison d'Or, B-1060 Bruxelles(BE)**

## Description

La présente invention est relative à un procédé pour confectionner un élément d'emballage en mousse synthétique pour le calage, le bourrage et le conditionnement d'objets à trois dimensions en vue d'amortir les chocs, comprenant les étapes suivantes :
- la confection d'une enveloppe extérieure de manière à obtenir un conditionnement présentant des évidements, et
- le remplissage au moins partiel desdits évidements au moyen de mousse synthétique.

Elle trouve sa principale application dans les ateliers d'emballage ou d'empaquetage d'objets fragiles de formes géométriques éventuellement complexes à l'aide d'éléments d'emballage rembourrés. Elle concerne également une chaîne automatique d'emballage permettant de compléter économiquement le remplissage d'une boîte qui n'est que partiellement remplie.

Le but de l'invention est de confectionner ou rembourrer des emballages à l'aide de matériaux plastiques courants et/ou de mousse synthétique en mettant en oeuvre une machine à injection automatique rapide, simple et flexible.

Les machines mises en oeuvre doivent pouvoir s'adapter aisément et rapidement à la mise en place d'enveloppes d'emballage de formes et de dimensions très différentes sans nécessiter de réglages fastidieux. Elles doivent même tolérer des changements fréquents de boîtes, de palettes ou pièces de rembourrage réalisés à partir d'empreintes.

Ces buts ont pu être atteints en combinant une machine de moulage par dépression ou une ligne de transport de boîtes ou caisses d'emballage à une machine de moulage par injection. En outre, en munissant les machines selon l'invention d'algorithmes de traitement et d'interprétation de la configuration des moules ou du relief des emballages encore en partie vides, on a pu effectuer l'injection de mousse de polyuréthane aux endroits souhaités avec une précision et une reproductibilité remarquables. Ainsi le traitement des données sensorielles, le contrôle et la coordination avec les vitesses de déplacements, les temps d'arrêt et le débit de la tête d'injection permettent de réaliser des éléments d'emballage anti-chocs efficients tout en réduisant les quantités de mousse de polyuréthane consommées pour les fabriquer.

Les éléments d'emballage obtenus selon l'invention ont une surface extérieure lisse, nette et éventuellement brillante.

Les protubérances sont souples parce que l'épaisseur de l'enveloppe de protection y est très mince, parfois de l'ordre de quelques dizaines de microns. Ils conviennent à merveille comme emballage anti-choc pour caler et protéger des objets fragiles.

On connaît par le brevet français n°2511889, ayant servi de base pour les préambules des revendications 1 et 7, une méthode pour fabriquer des pièces de rembourrage par coulée selon laquelle on recouvre le fond d'un moule ouvert ou encore le contenu d'une boîte partiellement remplie ou d'une palette, d'une pellicule de matière plastique souple déposée simplement sur le fond du moule ou sur les objets contenus dans la boîte ou palette, de manière à épouser les formes creuses. Ce procédé est utilisé pour l'emballage automatique dans une chaîne de production.

Les composants de base de la matière à mouler mélangés, éventuellement après additionnement d'un agent moussant ou porophore sont éventuellement chauffés et injectés à l'état liquide dans les évidements du moule ou dans la portion de volume à remplir.

Un mélange de constituants est injecté sous la pression atmosphérique dans le moule ou dans le volume de l'emballage ouvert à combler.

La mousse gonfle pendant la polymérisation sous l'action d'un dégagement gazeux dû à une réaction chimique ou à une décomposition d'un agent porophore.

Ce procédé très simple n'exige aucun matériel coûteux puisque les éléments de rembourrage sont obtenus simplement à partir d'un moule en bois, en matière plastique ou même en plâtre. Pour compléter une boîte il suffit de recouvrir le contenu d'un film polyéthylène.

L'aspect extérieur de l'élément moulé n'est cependant pas esthétique. Pour épouser la forme du moule, la pellicule de matière plastique est repliée en tous sens et présente de nombreux froissements qui laissent des marques indélébiles sur l'enveloppe extérieure des objets, qui est toute ridée. L'aspect extérieur des objets modelés de cette manière laisse beaucoup à désirer. Dans la plupart des cas, l'aspect esthétique n'est cependant pas très important.

Lorsque les dimensions de la boîte l'exigent, on prévoit de déplacer 1'appareil distributeur au moyen d'une commande programmée. Ce déplacement est cependant très rudimentaire et se résume à un simple pivotement inlassablement répété du bras-support de l'appareil distributeur pour le travail à la chaîne de produits identiques.

La présente invention vise à remédier à cet inconvénient et propose un procédé pour confectionner un élément d'emballage en mousse synthétique, le bourrage et le conditionnement d'objets à trois dimensions, en vue d'amortir les chocs, comprenant la confection d'une enveloppe extérieure de manière à obtenir un conditionnement présentant des évidements et le remplissage au moins partiel desdits évidements au moyen de mousse synthétique, essentiellement caractérisé en ce qu'on relève les dimensions, les volumes et les positions des évidements l'enveloppe par balayage de l'enveloppe à l'aide d'un organe sensoriel.

Dans un premier mode de réalisation particulier, on relève le relief des objets empilés dans une boîte, une caisse ou une palette ouverte à l'aide de l'organe sensoriel.

Dans un second mode de réalisation particulier, on relève par l'organe sensoriel, le relief d'une enveloppe obtenue préalablement par moulage par dépression à partir d'une feuille de matière plastique thermodéformable.

Suivant une particularité de l'invention, on remplit les évidements de l'enveloppe à l'aide d'un injecteur monté sur un chariot destiné à quadriller la surface de l'enveloppe sous le contrôle d'un ordinateur auquel sont transférées les information relevées dans un système de coordonnées par l'organe sensoriel ou par un lecteur qui enclenche un programme mémoire dans l'ordinateur.

On utilise avantageusement comme organe sensoriel une série de transmetteurs de niveau muni d'un détecteur à ultra-sons captant des informations à intervalles réguliers afin de déterminer la configuration architecturale de l'enveloppe susdite.

Dans ce procédé, on utilise les données sensorielles traitée et emmagasinées dans l'ordinateur pour effectuer le contrôle et la coordination de la tête d'injection.

L'invention concerne aussi un appareil pour confectionner un élément d'emballage susdit, cet appareil comprenant une tête d'injection de mousse dans une enveloppe extérieure dans laquelle est placé un objet à rembourrer.

Cet appareil est caractérisé en ce qu'il comporte un organe sensoriel monté sur un chariot capable de quadriller l'enveloppe en se déplaçant selon deux directions perpendiculaires.

D'autres particularités et détails de l'invention apparaîtront au cours de la description détaillée suivante, dans laquelle il est fait référence aux dessins annexés qui montrent, à titre d'exemple non limitatif une formule de réalisation d'un élément d'emballage et d'une machine automatique pour fabriquer cet emballage.

Dans ces dessins:

- la figure 1 est une vue en perspective d'un élément d'emballage;

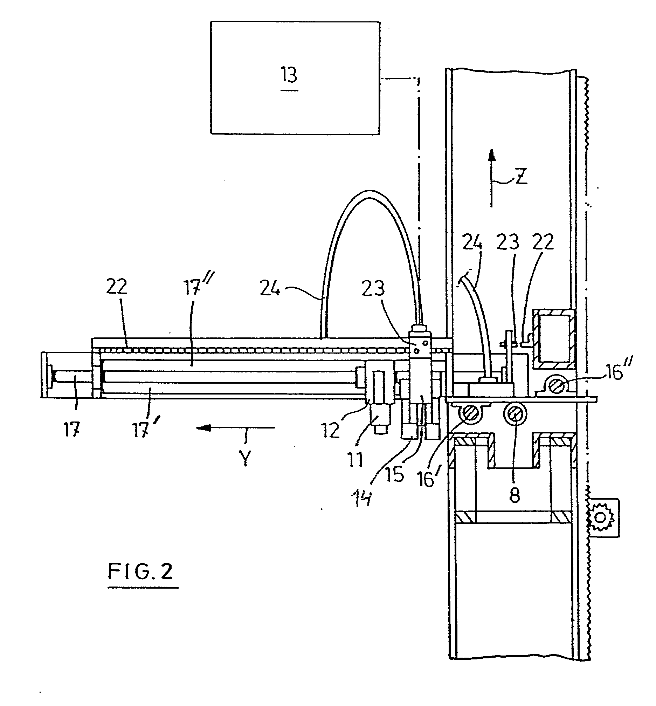

- la figure 2 est une vue en élévation latérale d'un appareil doseur selon l'invention;

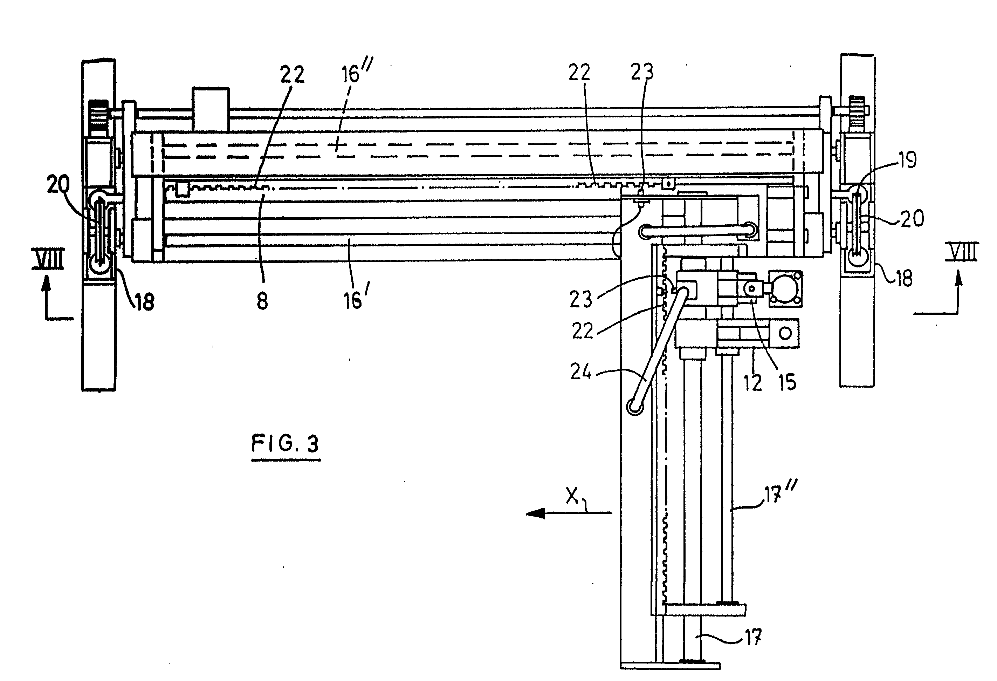

- la figure 3 est une vue en plan de l'appareil montré à la figure 2;

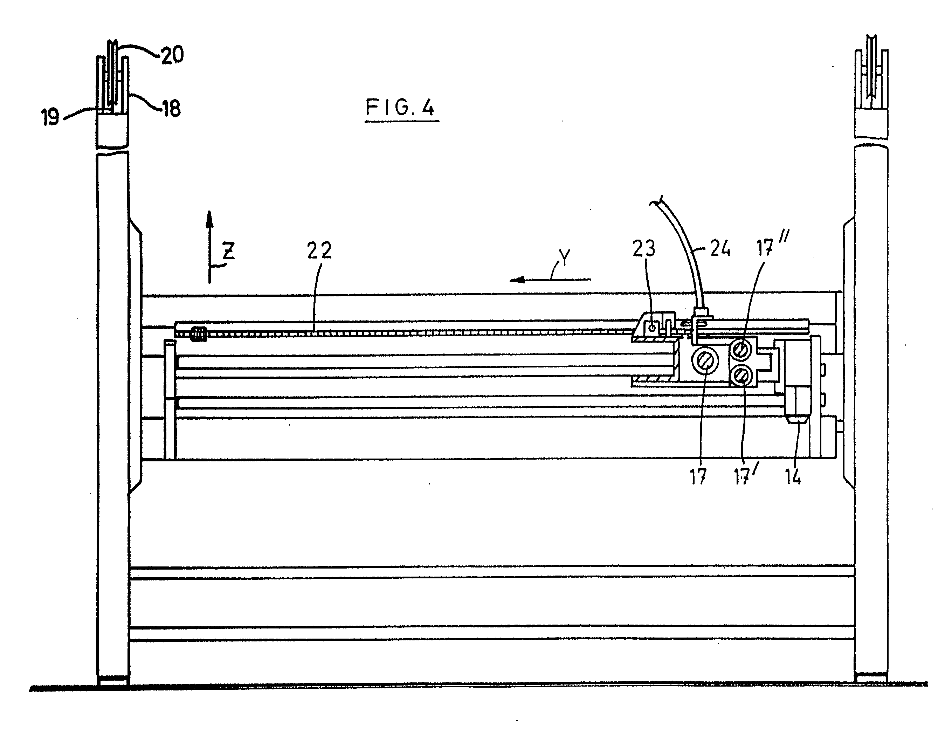

- la figure 4 est une vue en bout du chariot portant une tête d'injection;
- la figure 5 est une vue en perspective d'un appareil selon l'invention comportant un carrousel permettant de réaliser une enveloppe à partir d'une feuille thermoplastique par moulage par dépression;
- les figures 6 à 9 sont des vues en plan de l'appareil montré à la figure 5 et dont le carrousel occupe quatre positions successives différentes;
- la figure 10 est une vue en perspective d'un appareil selon l'invention comportant une série d'organes sensoriels;
- la figure 11 est un schéma de principe d'un appareil selon l'invention comportant une série d'organes sensoriels montré à la figure 5;
- la figure 12 est une vue en plan d'un circuit d'emballage.

Dans ces figures les mêmes notations de référence désignent des éléments identiques ou analogues.

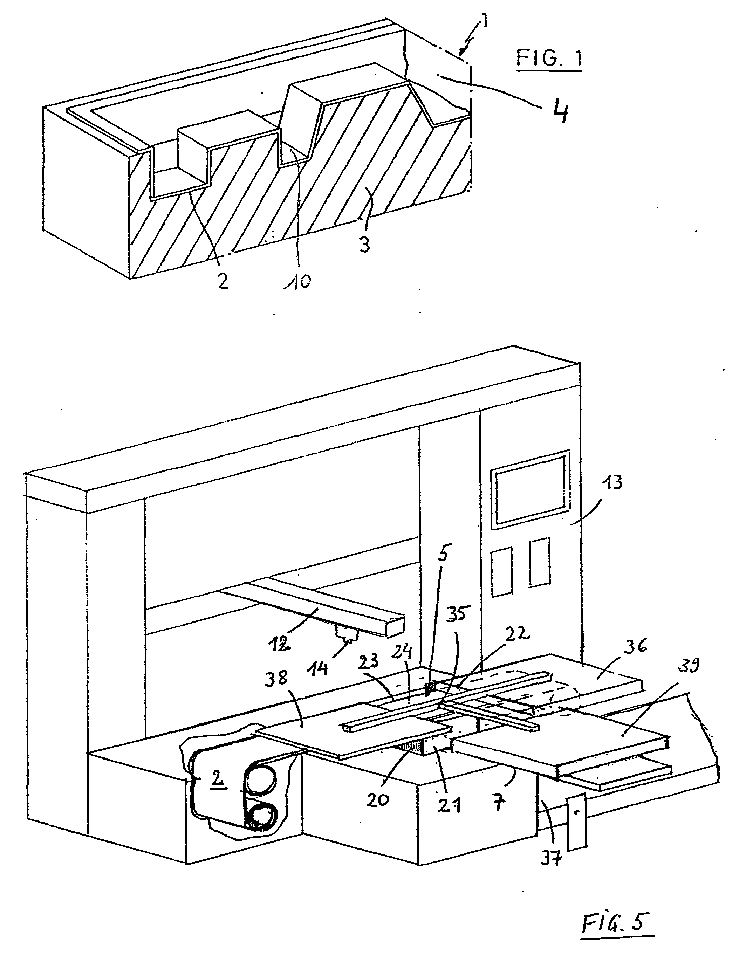

Comme illustré à la figure 1, un élément d'emballage anti-choc désigné dans son ensemble par la notation de référence 1 se présente sous la forme d'un objet moulé recouvert d'une enveloppe de protection constituée d'une feuille de matière thermoplastique 2 destinée à épouser les formes d'une partie d'un objet tridimensionnel 3 à emballer.

L'âme 4 de l'élément d'emballage 1 est une mousse en matière synthétique destinée à amortir les chocs. Cette matière est de préférence de la mousse polyuréthane, mais l'emploi de polystyrène expansé ou de caoutchouc-mousse n'est pas exclu.

L'enveloppe de protection constituée d'une feuille de matière thermoplastique 2 est mise en forme après préchauffage par moulage par dépression contre une paroi froide d'un moule 5 selon des procédés connus. Un tel moule est généralement réalisé en bois, en matière plastique ou même en plâtre.

On utilise de préférence une feuille de chlorure de polyvinyle, de polypropylène ou d'acétate de cellulose obtenue par laminage ou par coulage.

La feuille de matière thermoplastique est étendue au-dessus d'un moule ouvert et après avoir été préalablement ramollie sous l'action d'une source de chaleur rayonnante, par exemple une ou plusieurs lampes à rayons infra-rouges.

La feuille 2 est mise en contact sur le moule 5 à l'aide d'un serre-flan 7. On aspire ensuite l'air compris entre la feuille de matière thermoplastique 2 et la paroi froide de la matrice du moule 5. La feuille 2 prend alors la forme de cette matrice et se fige après un temps de refroidissement relativement court.

L'invention consiste à relever à l'aide d'un organe sensoriel 11 monté sur un chariot 12 à deux degrés de liberté qui quadrille le moule 5, ou à l'aide d'une série d'organes sensoriels alignés au travers d'une bande transporteuse et mis en oeuvre à tour de rôle de manière à effectuer un déplacement électronique, les dimensions et les positions des évidements 10 de matrice dudit moule 5 en vue de déterminer la configuration achitecturale du moule 5.

EXEMPLE 1

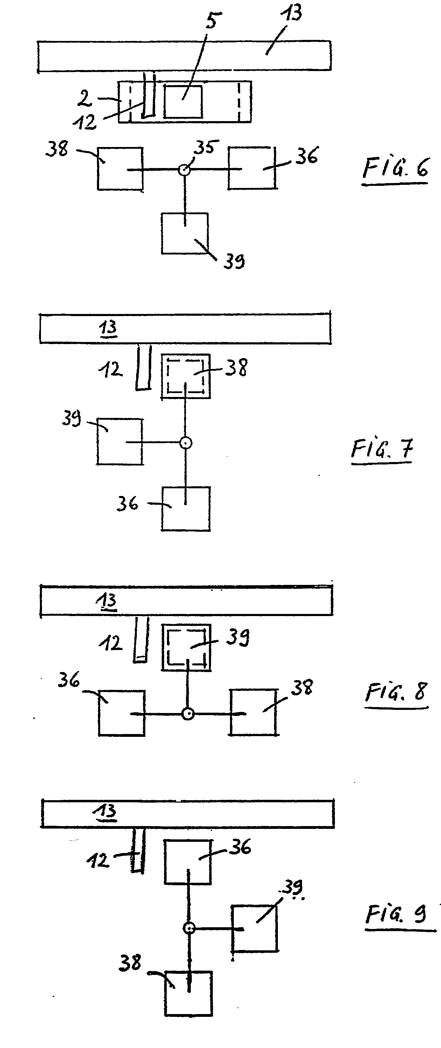

Comme illustré aux figures 5 à 9, le chariot 12 quadrille le moule 5 délimité par les parois 20, 21, 22 et 23.

Ce moule est disposé dans l'aire d'un poste de travail 24 d'un carrousel 35 muni d'une source de chaleur rayonnante 36, de moyens 37 pour créer une pression réduite de moyens 38 pour souder la feuille 2 à une feuille de recouvrement et de moyens 39 pour agripper et évacuer l'élément d'emballage ainsi préparé.

Dans une première étape, une feuille de matière thermoplastique est étendue au-dessus du moule 5 et ramollie sous l'action de la source de chaleur rayonnante 36. (Figures 6 et 7)

Après ramollissement de la feuille, celle-ci est déformée par dépression en créant sous celle-ci une pression réduite par les moyens 37.

Dans une troisième étape, montrée aux figures 5 et 8, le chariot 12 quadrille le moule de préférence en se déplaçant selon deux directions perpendiculaires X et Y.

Ce relevé du relief du film de matière moulé par dépression est effectué par l'organe sensoriel 11 constitué d'un capteur à ultra-sons mûr à vitesse constante et captant des informations tous les 5 cm de déplacement linéaire. Ces informations sont traitées et comparées avec les informations d'une configuration standard.

Endéans 2 à 3 secondes l'entièreté du programme de contrôle et de commande est calculé et réalisé par l'appareillage.

Il permet de déterminer sur un système référentiel cartésien plan la position et la profondeur de chaque évidement 10 du moule 5. Les résultats des mesures sont traités et emmagasinés sous forme matricielle dans la mémoire d'un ordinateur 13.

Ils permettent de commander les vitesses de déplacement, les temps d'arrêt éventuels et le débit de mousse polyuréthane injecté par une tête d'injection mobile 14 montée dans un second chariot 15 à deux degrés de liberté se déplaçant dans une direction X le long d'un guide 16 mû lui-même dans une direction Y perpendiculaire à la direction X de la tête d'injection 14 le long dudit guide 16.

Les informations provenant du relevé automatique de la configuration architecturale du moule 5, permettent donc d'effectuer dans un stade ultérieur le contrôle et la coordination de la tête d'injection 14 pour l'application 2.

Dans un premier temps le chariot 12 qui porte l'organe sensoriel 11 relève le relief de moule 5 en balayant la surface dudit moule 5. Entre-temps le second chariot 15 ou éventuellement le même chariot 12 portant la tête d'injection 14, parcourt à nouveau le moule par déplacements intermittents à une vitesse prédéterminée interrompue par des temps d'arrêts plus ou moins fréquents et prolongés, déterminés par l'ordinateur de contrôle 13. Les temps d'arrêt de la tête d'injection 14 au-dessus des évidements 10 du moule 5 sont simplement destinés à permettre le remplissage régulier du moule 5.

Le chariot est constitué avantageusement par le coulisseau extérieur 12 d'un vérin pneumatique magnétique 8 à double effet. Un tel vérin 8 comprend un piston en matériau magnétique permanent, relié magnétiquement au coulisseau susdit qui entoure extérieurement la gaine du piston. Sous l'action du piston, le coulisseau 12 circule dans un mouvement de va-et-vient le long de deux tiges-supports 16', 16″. Ces tiges-supports peuvent elles aussi être déplacées parallèlement à elles-mêmes le long de deux barres guides 17', 17″ perpendiculaires aux tiges-supports 16', 16″ sous l'action d'un second vérin 17 de manière à engendrer un mouvement plan à deux degrés de liberté. Ce plan formé par les tiges-supports 16', 16″ et les lames guides 17', 17″ est déplaçable en hauteur dans la direction t, le long des colonnes 18 à l'aide de câbles 19, de poulies de revoi 20 et de contrepoids 21.

Le long de chaque vérin est monté une latte graduée 22 coopérant avec un compteur d'impulsions optiques 23 monté sur le coulisseau. Les informations captées par le compteur d'impulsions sont transmises à l'ordinateur 13 que traite les données, les enregistre et les utilise pour commander l'admission et l'évacuation de l'air comprimé par les conduites 24 dans une des chambres de travail des vérins pneumatiques 8, 17.

Le chariot 15 portant la tête d'injection mobile 14 est semblable au chariot 12 et est monté de manière analogue sur la paire de barres-guides 17', 17″ se déplaçant le long des tiges supports 16', 16″ sous l'action d'un vérin 17.

Les mouvements de va-et-vient du chariot 15 sont commandés entièrement par l'ordinateur 13 qui détermine les vitesses de translation, la durée et la fréquence des temps d'immobilisation et éventuellement le débit de la tête d'injection 14.

On utilise comme organe sensoriel monté sur le chariot 12 un transmetteur de niveau à ultra-sons pour déterminer la configuration architecturale de l'élément de rembourrage délimité par la feuille thermoplastique obtenue par moulage par dépression. On peut également déterminer d'emblée le relief de l'objet ou des objets à emballer, déposés dans une boîte ou palette 26 incomplètement remplie avant de les recouvrir d'une feuille. Après avoir relevé le relief des objets à immobiliser, on recouvre ceux-ci d'une simple feuille souple de polyéthylène mise en place par dépression ou par brossage.

Pendant la phase d'injection des évidements 10 de l'empreinte constituée d'une feuille de matière plastique 2 moulée par dépression, le pistolet doseur 14 porté par le chariot 12 est animé d'un mouvement de translation effectué par saccades à une vitesse de base sensiblement constante interrompues en des endroits prédéterminés par des temps d'arrêt de durrées variables et des vitesses variables calculées par l'ordinateur 13.

Le repérage des points de référence est réalisé à l'aide d'interrupteurs d'approche ou de contact qui comptent le nombre de dents crénelées rencontrées sur le passage et transmettent ce nombre à l'ordinateur 13.

Ce programme tient compte de deux grandeurs physiques arbitraires indépendantes : le temps et le trajet à effectuer. Le point de référence ou origine est le point 0,0 des coordonnées. L'expiration d'un intervalle de temps intermédiaire entraîne le départ du mouvement de translation suivant. De cette manière le ralentissement ou l'accélération des déplacements n'entraîne pas d'erreur cumulative dans la durée totale du trajet.

Le système de coordonnées est de préférence un système référentiel à deux mouvements linéaires perpendiculaires entre eux, permettant le déplacement de chacun des chariots.

L'appareil constitue en fait un robot de la deuxième génération exécutant le remplissage des moules 5 en mode interactif, en utilisant des informations perçues au sujet de la configuration des moules, par les organes sensoriels 11 et l'ordinateur 13 de manière à réduire la consommation de mousse de polyuréthane.

En remplaçant le moule ouvert 5 par un autre, de forme et de dimensions différentes, l'appareil doseur selon l'invention permet de réaliser un assortiment diversifié de produits avec des périodes de conversion très courtes. Le moule 5 peut par exemple être constitué directement de la boîte contenant le ou les objets à emballer.

La confection des éléments d'emballage peut se réaliser manuellement à l'aide d'un pistolet doseur, dans lequel sont mélangés les deux composants d'une mousse de polyuréthane. On préfère cependant réaliser cette fabrication automatiquement.

L'appareil suivant l'invention permet d'automatiser cette fabrication, de manière flexible et pré-programmée. Le fait d'obliger le pistolet doseur à suivre une trajectoire bien déterminée à des vitesses et temps d'arrêts calculés par ordinateur en fonction des informations relevées par un organe sensoriel 11 permet non seulement de réduire le travail manuel ainsi que la consommation de matières premières d'environ 35 % par rapport à la qualité de matière qui aurait été utilisée par un dosage manuel. En effet, la mousse de polyuréthane gonfle et se stabilise déjà après environ 10 à 60 secondes. Le pouvoir gonflant dépend de la formule chimique, du calibre du pistolet doseur, la température et la viscosité des composants de la mousse et de la pression.

La plus grosse difficulté consiste à répartir uniformément la mousse en fine couche sur une grande surface. L'automate y parvient sans problème par un mouvement linéaire saccadé avec les paramètres suivants:
- vitesse de déplacement variable du chariot : 0 à 1 m/s
- débit de l'injection de mousse : de 50 à 100 cm³/s
- volume de mousse après gonflement: de 6250 à 12500cm³/s

L'invention concerne aussi une chaîne d'emballage automatique, dans laquelle des boîtes ou moules contenant ou destinés à contenir des objets différents, sont comblées automatiquement de mousse. Les objets sont éventuellement recouverts au préalable d'une feuille de polyéthylène.

Les boîtes partiellement remplies ou les moules peuvent être reconnus par un système lecteur qui enclenche un programme déterminé mémorisé dans l'ordinateur et correspondant à l'objet à encapsuler.

On peut également prévoir dans une chaîne d'emballage plus performante, de déterminer à l'aide d'un senseur à ultra-sons le relief de chacune des boîtes qui défile sur le convoyeur et d'encapsuler l'objet de manière programmée à l'aide du programme individuel établi quelques instants plus tôt.

## EXEMPLE 2

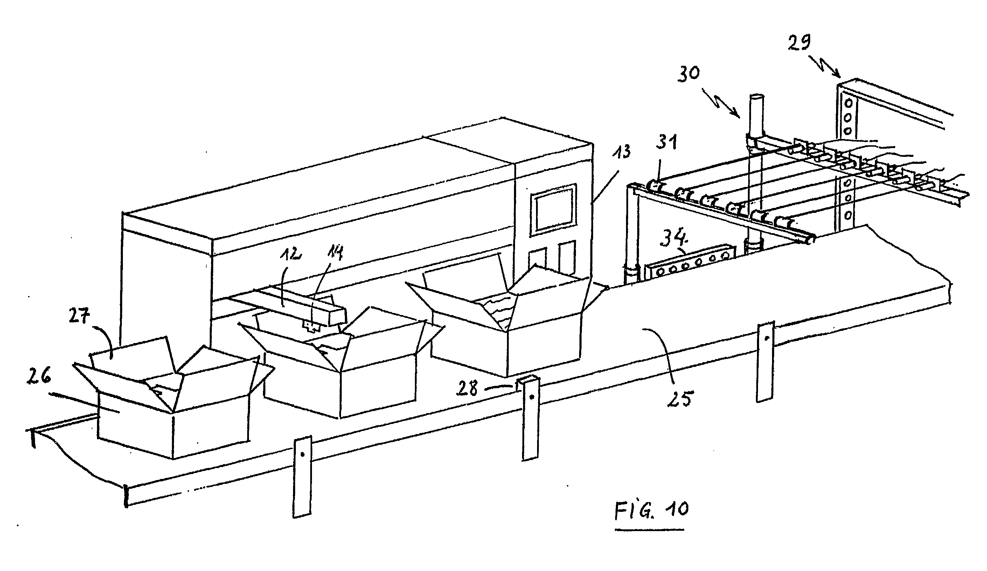

Dans une forme de réalisation de l'invention illustrée à la figure 10,, on dépose des boîtes en carton 26 sur une bande transporteuse 32 d'une chaîne d'emballage automatique et on dépose les objets à emballer dans la boîte en carton 26 ouverte à sa partie supérieure. La boîte n'est éventuellement remplie qu'en partie. Les dimensions de la boîte sont avantageusement comprises entre l 200 mm x L 200 mm x H 200 mm et l 900 mm x L 1200 mm x H 800 mm. Les rabats 27 sont repliés vers l'extérieur.

La boîte est maintenue appuyée contre la bande transporteuse 25 et un capteur 28 signale la présence de la boîte 26 prête à défiler sous un portique 29 qui détermine la largeur l et la hauteur H de la boîte 26 ainsi que la longueur L de celle-ci.

On détermine la largeur de la boîte en appuyant contre celle-ci un palpeur et en déterminant sa position à l'aide d'une latte optique 34.

Un deuxième portique 30 muni d'une série d'organes sensoriels 11 à ultra-sons adapte au mieux sa hauteur et la distance entre organes sensoriels 11 successifs de manière à relever au mieux le relief des objets à emballer.

Le relevé du relief de la boîte 26 est réalisé par une série d'organes sensoriels 11 constitués chacun d'un détecteur à ultra-sons répartis à intervalles réguliers au travers de la bande sans fin 25 transportant des boîtes contenant les objets tridimensionnels à conditionner. Les organes sensoriels captent des informations par exemple tous les 5 cm de déplacement linéaire des boîtes. Ces informations sont traitées et comparées avec les informations d'une configuration standard. Endéans 2 à 3 secondes l'entièreté du programme de contrôle et de commande est calculé et réalisé par l'appareillage.

Dans une forme de réalisation particulière les organes sensoriels 11 sont des appareils acoustiques de mesure des distances. Ils produisent un premier signal acoustique et déterminent l'invervalle de temps qui sépare ce premier signal d'un second signal réfléchi par écho.

On peut utiliser par exemple, un organe sensoriel 11 présentant un angle d'ouverture de 10°, réduit à 4° à l'aide d'un miroir parabolique 31. La fréquende s'élève à environ 200 kHz. Douze organes sensoriels 11 sont repartis en ligne le long d'une traverse d'un portique perpendiculaire à la trajectoire de la bande transporteuse 25.L'orientation du portique 30 peut éventuellement être modifiée selon la largeur des boîtes. Ainsi pour des boîtes 26 de largeur l réduite la poutre transversale du portique 30 est orientée obliquement par rapport à la trajectoire de la bande transporteuse 25, de manière à concentrer l'action des organes sensoriels 11 sur une aire de travail réduite de manière à augmenter la précision des mesures réalisées par les organes sensoriels 11.

Une autre manière de modifier l'aire de balayage des organes sensoriels 11 consiste à modifier leur position sur la poutre transversale du portique 30.

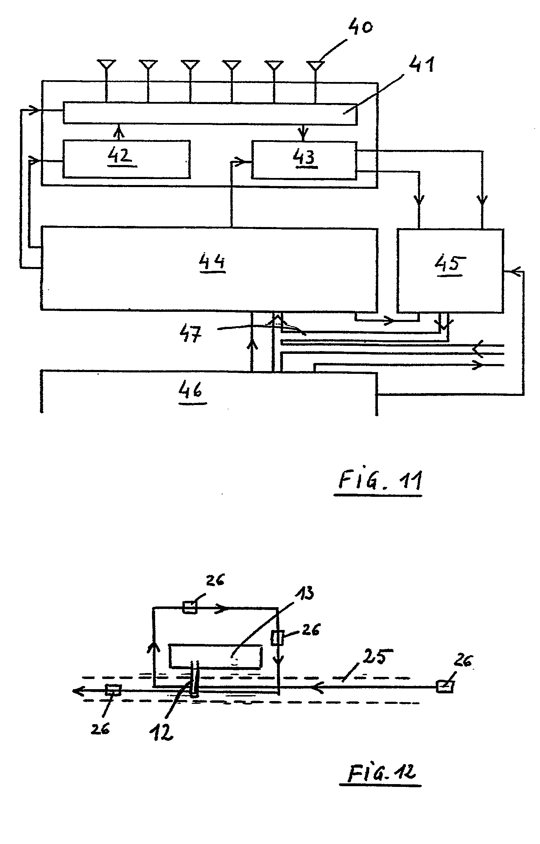

Pour réduire le cycle de mesure des douze organes sensoriels acoustiques, qui en raison de la réflexion du signal de mesure dure environ 29 microsecondes, on enclenche le signal de base avant que le cycle de mesure de l'organe sensoriel précédent dans le temps mais éloigné dans l'espace, n'ait terminé de manière à émettre le signal de base de l'organe sensoriel suivant avant que le signal réfléchi ne soit capté par l'organe sensoriel précédent. En outre, deux organes sensoriels successifs ne sont pas nécessairement voisins. Un schéma de principe de la connexion des organes sensoriels acoustiques 11 au microordinateur 13 est illustré à la figure 11.

Chaque organe sensoriel est relié à tour de rôle à un générateur 42 et à un amplificateur-détecteur 43 à l'aide d'un multiplexeur 41. Le choix de l'organe sensoriel 11 à prendre en considération est déterminé par le codeur d'adresses 44, qui enclenche chacun des organes sensoriels dans l'ordre souhaité. Le codeur d'adresses 44 ordonne au générateur de donner une impulsion à l'organe sensoriel 11 désigné par le multiplexeur 41 et à l'amplificateur-détecteur 43 d'ouvrir un intervalle de mesure pour éviter un fauxécho. Un compteur 45 est remis à zéro au début de chaque mesure par le codeur d'adresses 44. L'amplificateur-détecteur 43 émet des impulsions de comptage vers le compteur 45 aussi longtemps qu'aucun écho convenable n'est perçu. La porte I/O 46 du micro-ordinateur 13 relève le compteur 45 par l'intermédiaire d'un bus de données commun 47. Par le même bus de données, on relève la latte optique de la bande transporteuse 25, la largeur et la hauteur de la boîte. On obtient ainsi à peu de frais une configuration hardware pour un taux d'occupation normal du micro-ordinateur 13. La boîte poursuit son trajet vers l'injecteur. Le modèle d'injection est calculé par le micro-ordinateur 13 en 2 à 3 s.

En veillant à ce que la mousse gonfle jusqu'aux rabats de la boîte on peut réaliser en une seule opération, une boîte on peut réaliser en une seule opération, une boîte recouverte intérieurement de mousse sur les six côtés.

Il est évident que l'invention n'est pas limitée strictement à la forme de réalisation décrite ci-dessus et que l'on peut apporter de nombreuses autres modifications constructives à l'appareil selon l'invention et en particulier aux moyens d'agrippage du moule ou à la composition de la mousse synthétique sans pour autant sortir du cadre de l'invention, délimité par les revendications suivantes.

Ainsi, les organes sensoriels acoustiques 11 peuvent être remplacés par des organes sensoriels optiques.

Il n'est pas exclu de monter le pistolet doseur de l'injecteur sur le chariot même de l'organe sensoriel 11 qui relève le relief du moule 5.

## Revendications

1. Procédé pour confectionner un élément d'emballage (1) en mousse synthétique pour le cablage, le bourrage et le conditionement d'objets à trois dimensions (3), en vue d'amortir les chocs, comprenant la confection d'une enveloppe extérieure de manière à obtenir un conditionnement présentant des évidements que l'on remplit ensuite au moins partiellement de mousse synthétique, pour encapsuler l'objet à emballer caractérisé en ce qu'on relève les dimensions, les volumes et les positions des évidements (10) de l'enveloppe (2) par balayage de l'enveloppe (2) à l'aide d'un organe sensoriel (11).

2. Procédé selon la revendication 1, caractérisé en ce qu'on relève le relief des objets empilés dans une boîte, une caisse ou une palette ouverte à l'aide d'un organe sensoriel (11).

3. Procédé selon l'une des revendications 1 ou 2, caractérisé en ce qu'on effectue le remplissage des évidements des conditionnements en mode interactif, en utilisant des informations perçues au sujet de la configuration des moules, c'est-à-dire la localisationet le volume des évidements relevés par les organes sensoriels (11) et rassemblés dans l'ordinateur (13) de manière à réduire la consommation de mousse synthétique.

4. Procédé selon la revendication 3, caractérisé en ce qu'on remplit les évidements (10) de l'enveloppe à l'aide d'un injecteur (14) monté sur un chariot (15) destiné à quadriller la surface de l'enveloppe sous le contrôle d'un ordinateur (13) auquel sont transférées les informations relevées dans un système de coordonnées par l'organe sensoriel (11) ou par un lecteur qui enclenche un programme mémoire dans l'ordinateur.

5. Procédé selon l'une quelconque des revendications précédentes, caractérisé en ce qu'on utilise comme organe sensoriel (11) une série de transmetteurs de niveau muni d'un détecteur acoustique, de préférence à ultra-sons ou optiques captant des informations à intervalles réguliers afin de déterminer la configuration architectural de l'enveloppe.

6. Procédé selon l'une quelconque des revendications précédentes, caractérisé en ce qu'on utilise les données sensorielles traitées et emmagasinées dans l'ordinateur (13) pour effectuer le contrôle et la coordination de la tête d'injection (14).

7. Appareil pour confectionner un élément d'emballage selon l'une des revendications précédentes, cet appareil comprenant une tête d'injection de mousse dans une enveloppe extérieure dans laquelle est placé un objet à rembourrer, caractérisé en ce qu'il comporte un organe sensoriel (11) monté sur un chariot capable de quadriller l'enveloppe en se déplaçant selon deux directions perpendiculaires X et Y.

## Claims

1. Process for making a packaging element (1) of synthetic foam for packing, padding and packaging three-dimensional objects (3), with a view to absorbing shocks, comprising the making of an outer wrapping so as to obtain a packaging having hollows which are then filled at least partially with synthetic foam, to encapsulate the object to be packaged, characterised in that the dimensions, volumes and positions of the hollows (10) of the wrapping (2) are detected by scanning the wrapping (2) with the aid of a sensor device (11).

2. Process according to claim 1, characterised in that the relief of the objects stacked in a box, case or open palette is detected with the aid of a sensor device (11).

3. Process according to one of claims 1 or 2, characterised in that the filling of the hollows in the packagings is carried out by an interactive method, using the information gathered about the configuration of the moulds, i.e. the locality and volume of the hollows detected by the sensor devices (11) and collected in the computer (13) so as to reduce the consumption of synthetic foam.

4. Process according to claim 3, characterised in that the hollows (10) in the wrapping are filled with the aid of an injector (14) mounted on a carriage (15) for traversing the surface of the wrapping in a grid under the control of a computer (13) to which is transferred the information detected in a system of coordinates by the sensor device (11) or by a reader which engages a programme memory in the computer.

5. Process according to any one of the preceding claims, characterised in that as a sensor device (11) there is used a series of level transmitters provided with an acoustic detector, preferably ultrasonic or optical, detecting information at regular intervals so as to determine the architectural configuration of the wrapping.

6. Process according to any one of the preceding claims, characterised in that the sensor data processed and stored in the computer (13) is used to control and coordinate the injection head (14).

7. Apparatus for making a packaging element according to one of the preceding claims, this apparatus comprising a foam-injection head in an outer wrapping in which is placed an object to be padded, characterised in that it comprises a sensor device (11) mounted on a carriage capable of traversing the wrapping in a grid moving in two perpendicular directions x and y.

**Patentansprüche**

1. Verfahren zur Herstellung eines Verpackungselementes (1) aus synthetischem Schaumstoff für die Verkabelung, Abdichtung und die Verpackung von dreidimensionalen Gegenständen (3), um Stöße zu dämpfen, umfassend die Herstellung einer äußeren Hülle, um eine Verpackung zu erhalten, die Hohlräume bzw. Aussparungen aufweist, die darauf wenigstens teilweise mit Kunststoffschaum ausgefüllt werden, um den zu verpackenden Gegenstand einzukapseln, dadurch gekennzeichnet, daß die Dimensionen, Volumina und Positionen der Aussparungen (10) der Hülle (29) durch Abtasten der Hülle (2) mittels eines sensorischen Organes (11) ermittelt werden.

2. Verfahren nach Anspruch 1, dadurch gekennzeichnet, daß die Umrisse der in einer offenen Schachtel, einer Kiste oder einer Palette untergebrachten Gegenstände mittels eines sensorischen Organes (11) bestimmt bzw. geortet werden.

3. Verfahren nach Anspruch 1 oder 2, dadurch gekennzeichnet, daß das Ausfüllen der Aussparungen der Verpackungen auf gegenseitig abhängige bzw. wechselseitig wirkende Weise durchgeführt wird, indem in bezug auf die Konfiguration der Formen d.h. in bezug auf die Ortsbestimmung und das Volumen der Aussparungen von den sensorischen Organen (11) ermittelte Informationen verwendet und im Rechner (13) so verarbeitet werden, daß der Verbrauch an Kunststoffschaum verringert wird.

4. Verfahren nach Anspruch 3, dadurch gekennzeichnet, daß die Aussparungen (10) der Hülle mittels eines Injektors (14) ausgefüllt werden, der auf einem Fahrgestell (15) befestigt ist, das dazu bestimmt ist, die Oberfläche der Hülle unter der Steuerung eines Rechners (13), auf den die vom sensorischen Organ (11) in einem Koordinationssystem ermittelten Informationen übertragen werden, oder durch eine Leseeinrichtung, die ein im Rechner gespeichertes Programm enthält, in Quadrate einzuteilen.

5. Verfahren nach einem der vorhergehenden Ansprüche, dadurch gekennzeichnet, daß als sensorisches Organ (11) eine Reihe von Niveauübertragungseinrichtungen verwendet wird, die mit einem akustischen Detektor, vorzugsweise Ultraschall- oder optischen Detektor, versehen ist, der Informationen in regelmäßigen Intervallen detektiert, um die architektonische Konfiguration der Hülle zu bestimmen.

6. Verfahren nach einem der vorhergehenden Ansprüche, dadurch gekennzeichnet, daß die sensorischen Daten verwendet werden, die im Rechner (13) verarbeitet und gespeichert werden, um die Steuerung und Koordination des Spritzkopfes (14) zu bewirken.

7. Vorrichtung zur Herstellung eines Verpackungselementes nach einem der vorhergehenden Ansprüche, wobei diese Vorrichtung einen Spritzkopf für Schaum in eine äußere Hülle umfaßt, in der ein mit einer Polsterung zu umgebender Gegenstand in Stellung gebracht ist, dadurch gekennzeichnet, daß sie ein sensorisches Organ (11) umfaßt, das auf einem Fahrgestell montiert ist, das dazu geeignet ist, die Hülle in Quadrate einzuteilen, indem es sich entlang von zwei senkrechten Richtungen x und y verschiebt.

FIG. 1

FIG. 5

FIG. 2

FIG. 3

EP 0 250 389 B1

FIG. 4

EP 0 250 389 B1

FIG. 6

FIG. 7

FIG. 8

FIG. 9

FIG. 10

EP 0 250 389 B1

FIG. 11

FIG. 12